Europäisches Patentamt

European Patent Office

Office européen des brevets

(19)

(11) **EP 1 492 358 A2**

(12) **EUROPEAN PATENT APPLICATION**

(43) Date of publication:
**29.12.2004 Bulletin 2004/53**

(51) Int Cl.7: **H04N 13/04**

(21) Application number: **04014476.8**

(22) Date of filing: **21.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **25.06.2003 IT TO20030479**

(71) Applicant: **TECNODI S.r.L.**
**20123 Milano (IT)**

(72) Inventors:
• **Menegatti, Barbara Antonella**
**20016 Pero (Milano) (IT)**
• **Pietra, Ugo**
**20131 Milano (IT)**
• **Pietra, Carlo**
**20132 Milano (IT)**
• **Bontempelli, Mauro**
**20149 Milano (IT)**

(74) Representative: **Gerbino, Angelo et al**
**Jacobacci & Partners S.p.A.**
**Corso Regio Parco, 27**
**10152 Torino (IT)**

(54) **Process for the formation of images suitable for three-dimensional viewing, and image obtained using that process**

(57)    A process for the formation of an image suitable for three-dimensional viewing comprises the stages of providing (201; 301) a two-dimensional input image capable of being processed as a matrix of elemental areas, each of the elemental areas being associated with a colour identified by a plurality of colour components; providing (202; 302) a pair of viewpoints ($O_1$, $O_2$) and, at a predetermined distance ($z_p$) therefrom, a plane (100) for projection of the images observed from the viewpoints respectively; defining (204, 205; 303) image portions in the input image each containing a part of the matrix of elemental areas, each of the image portions being associated with the same distance from the viewpoints ($O_1$, $O_2$); and applying (204, 205; 303) a lateral displacement in the same colour component to the elements of the matrix, the displacement having a value which is substantially the same within an individual portion of the input image, and being correlated with its distance from the viewpoints ($O_1$, $O_2$) and from the projection plane (100).

FIG. 3

START

TWO-DIMENSIONAL IMAGE ACQUISITION — 201

DISPLAY OF THE INPUT IMAGE — 202

SETTING OF VIRTUAL VIEWPOINTS $O_1$ AND $O_2$ AND THE VIRTUAL PROJECTION PLANE — 203

SAME DISPLACEMENT OF THE RED COMPONENT THROUGHOUT THE IMAGE — 204

DEPTH EFFECT DESIRED?   YES

NO

RESTORING THE VALUES OF THE RED COMPONENT WITHIN ONE OR MORE PORTIONS OF THE DISPLAYED IMAGE — 205

DEPTH EFFECT REQUIRED? — 206
NO

YES

STOP

**Description**

This invention relates to a process for the formation of images suitable for three-dimensional viewing.

As is known, the ability of an observer to appreciate differences in the distance of objects from various points, on which perception of the depth of the objects in the space to which they belong mainly depends, is associated with many factors involving geometrical optics, physiology and psychology. Specifically the appreciation of differences in distance translates into the location of objects in a succession of planes normal to the lines of sight, which are graded in depth, that is at different distances.

Direct perception of depth through binocular vision, or the stereoscopic effect, is due to the difference in perspective of objects seen simultaneously by the two eyes: the inter-pupillary distance in fact has the result that the directions in which a given point is observed by the two eyes define an angle, known as the stereoscopic parallax, which decreases as the distance of the aforesaid point from the observer increases.

As the parallax between points at different depths changes, corresponding to rotation of the eyeballs, this is associated with a habitual and unconscious physiological response which is one of the important factors in providing the observer with the sensations leading to the perception of depth.

Artificial production of the stereoscopic effect conventionally requires the provision of a stereoscopic pair of figures (e.g. drawings or photographs) each of which lie in one plane, and are therefore devoid of depth, each of which comprises the perspective of the object provided with depth as observed by one of the eyes. A stereoscopic pair of figures may be obtained, for example, through a stereophotographic camera, the two objectives of which simulate the positions of the eyes. Simultaneous viewing of the figures, which may take place without any tool, if the observer is located in a suitable position, or with the help of a stereoscope, and their fusion in the brain into a single visual sensation, gives rise to the stereoscopic effect.

A known method for observing stereoscopic images, known as the anaglyph method, is based on the use of complementary colours. The two images forming the stereoscopic pair are drawn or projected in complementary colours, for example green and red, which almost overlap. These images are observed through coloured spectacles having two glasses which are red and green respectively. The eye with the red glass thus sees only the image drawn in green as if it were black on a white ground and the eye with the green glass sees only the drawing drawn in red as if it were black on a white ground.

The images obtained using this technique have evident coloured strips which can substantially affect the view of the image made without the help of the spectacles. In addition to this, making images using the anaglyph technique is relatively complex as it requires some special processing, for example as regards the colours of the two images.

As far as dynamic images are concerned, an attempt is made to reproduce the perception of the three dimensions in space through the use of a pair of identical recording devices arranged in the same way as the eyes of an individual and coordinated in movement. According to a technique known as interlacing, the two recorded images are merged into a single image, the even lines of which belong to one of the images recorded while the odd lines of which belong to the other. In order to generate the three-dimensional effect, different polarisation is applied to the two groups of lines.

In order to be seen interlaced, images require very costly and complex equipment, requiring a screen with polarisation lines, a pair of projectors and complex dedicated spectacles. Interlacing has the disadvantage that it reduces the luminosity and brightness of images, as information and image continuity are lost in the process.

The object of this invention is to provide a relatively simple and economic process for the formation of images suitable for three-dimensional viewing which can be adapted to the processing of both static images and dynamic images.

This object is accomplished according to the invention by a process for the formation of images suitable for three-dimensional viewing having the features defined in the claims.

In addition to this, when applied to static images, the process according to the invention makes it possible to obtain images with only slight deterioration, as a result of which it is also possible to achieve satisfactory two-dimensional viewing without the use of devices such as spectacles or stereoscopes.

In addition to this, when applied to dynamic images, the process according to the invention makes it possible to record images very easily without the use of particularly complex or costly equipment, ensuring the possibility of obtaining a preview of the recordings in order to evaluate the effect obtained. In the cinematography industry, this possibility, apart from achieving a significant reduction in times and costs in comparison with conventional systems, also offers intrinsic flexibility which makes it possible to handle special or spectacular effects. These images can then be restituted as well on televisions or cinema screens of a conventional type.

Furthermore, the possibility of having an image which is suitable for three-dimensional viewing in real time and at low cost renders the process according to the invention particularly suitable for an application in the direct three-dimensional television sector.

A further object of the invention is an image suitable for three-dimensional viewing having the features defined in Claims 10 to 12.

Preferred but non-restrictive embodiments of the invention will now be described with reference to the appended drawings, in which:

- Figure 1 is a block diagram showing equipment suitable for implementing a process according to the invention;
- Figure 2 is a diagrammatical figure illustrating the mechanism of depth perception;
- Figure 3 is a flow diagram illustrating a first embodiment of the process according to the invention;
- Figures 4 are diagrammatical figures illustrating the functioning of the process in Figure 3;
- Figure 5 is a flow diagram illustrating a second embodiment of the process according to the invention; and
- Figure 6 is a flow diagram illustrating a third embodiment of the process according to the invention.

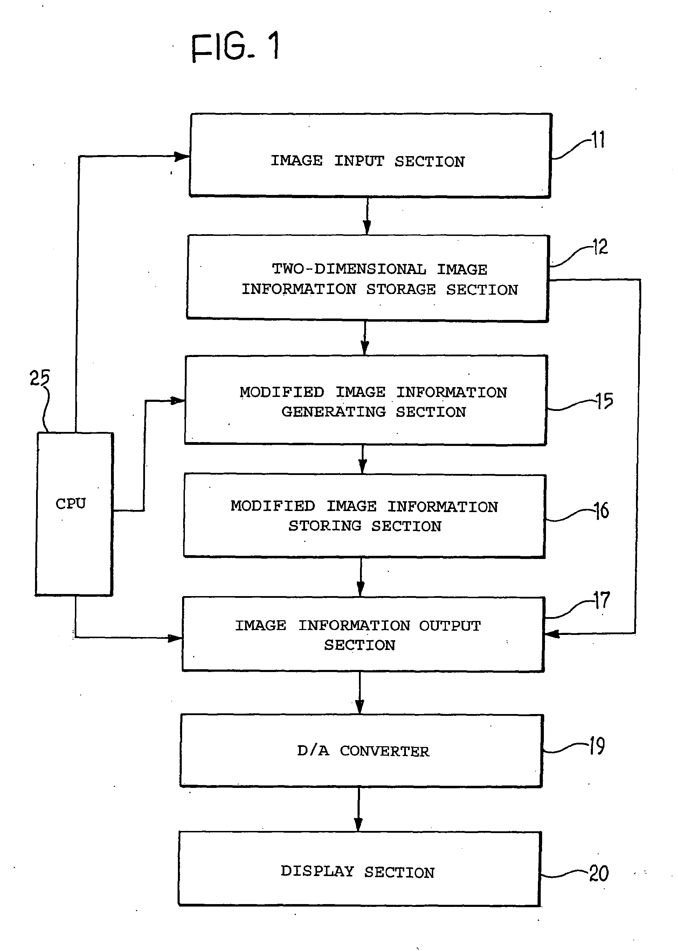

With reference to Figure 1, equipment which is suitable for implementing a process according to the invention comprises an image input section 11 capable of collecting at least one image of a real object or a document, for example a drawing or photograph, in such a way as to generate at least one item of two-dimensional digital image information corresponding to the image collected. An image information storage section 12 stores the digital image information generated by image input section 11.

As is known, the digital image input information can be represented as a matrix of elemental areas or pixels subdivided into rows and columns. Each pixel is assigned a relative colour value associated with that pixel. There are various ways in representing a pixel value, including for example the RGB (red, green, blue) code. For simplicity, the description below will always refer to the RGB code, in which the colour associated with a pixel will be identified by a triad of the components red, green and blue.

A modified image information generating section 15, which will be described in greater detail below, generates digitally modified image information which is stored by a modified image information storage section 16. An image information output section 17 reads the digital modified image information and provides it to a D/A converter 19, which converts it to analogue image information. A display section 20, comprising for example a cathode ray-tube or liquid crystal monitor, provides an output image on the basis of the analogue image information.

A CPU 25 controls image input section 11, modified image information generating section 15 and image information output section 17 so as to form an image which is suitable for three-dimensional viewing.

As is known, parallax transformation of the input image into the output image is associated with displacement of the three-dimensional objects with respect to each other. The displacement occurs as a consequence, for example, of a change in the observer's position with respect to the scene, a change in the orientation of the observer with respect to the scene, a change in the relative positions of objects due to their relative speeds, or a combination of these changes.

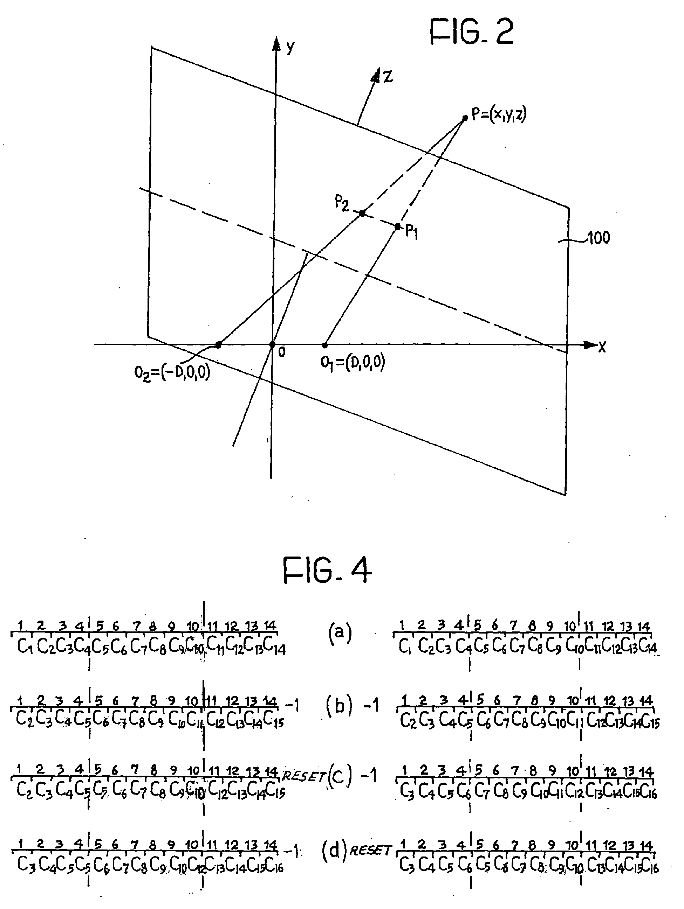

Figure 2 diagrammatically illustrates the mechanism of depth perception. A system of three-dimensional coordinates with an x axis, a y axis and a z axis is therefore represented.

A two-dimensional image is formed by a matrix of discrete pixels arranged in rows and columns. By pixel is meant the smallest entity considered in the process of preparing the image according to the invention. Each pixel in a specific row in the image may have only one of a discrete series of positions. Each row of pixels in an image extends parallel to the x axis, so that each pixel can be identified on the basis of its x coordinate. Each column of pixels extends parallel to the y axis in a direction perpendicular to the x axis. The depth of the scene is measured along the z axis, which extends perpendicularly to the x axis and the y axis. A value of coordinate z is assigned to each pixel to represent the depth of the scene for that pixel.

In order to explain parallax displacement of the pixels, the origin $O = (0, 0, 0)$ and the orientation of the system of coordinates is selected in such a way that a three-dimensional object represented by the point $P = (x, y, z)$ is observed from observation point $O_1 = (D, 0, 0)$, and from observation point $O_2 = (-D, 0, 0,)$. It is assumed that the plane $z = z_p$ corresponds to the focal plane 100 (the plane on which the observer's eyes located at $O_1$ and $O_2$ respectively focus). The two-dimensional image seen from observation points $O_1$ and $O_2$ is formed from a projection of the three-dimensional objects in the focal plane, which is also indicated as the projection plane. Point P is therefore projected at $P_1$ and $P_2$. It is known that the parallax displacement d between projected points $P_1$ and $P_2$ is given geometrically by the formula:

$$d = 2D\,(z_p/z - 1). \qquad (1)$$

It will therefore be seen that the displacement d increases in modulus with the distance from the focal plane. In the formula, 2D corresponds to the offset between the observation points $O_1$ and $O_2$. This value also corresponds to the parallax for a point which is very far off ($z = \infty$). Because the eye's directions of observation converge on the plane $z = z_p$, no parallax is produced for objects in this plane. The absolute direction of the displacement varies according to whether the object lies in front of or behind the focal plane.

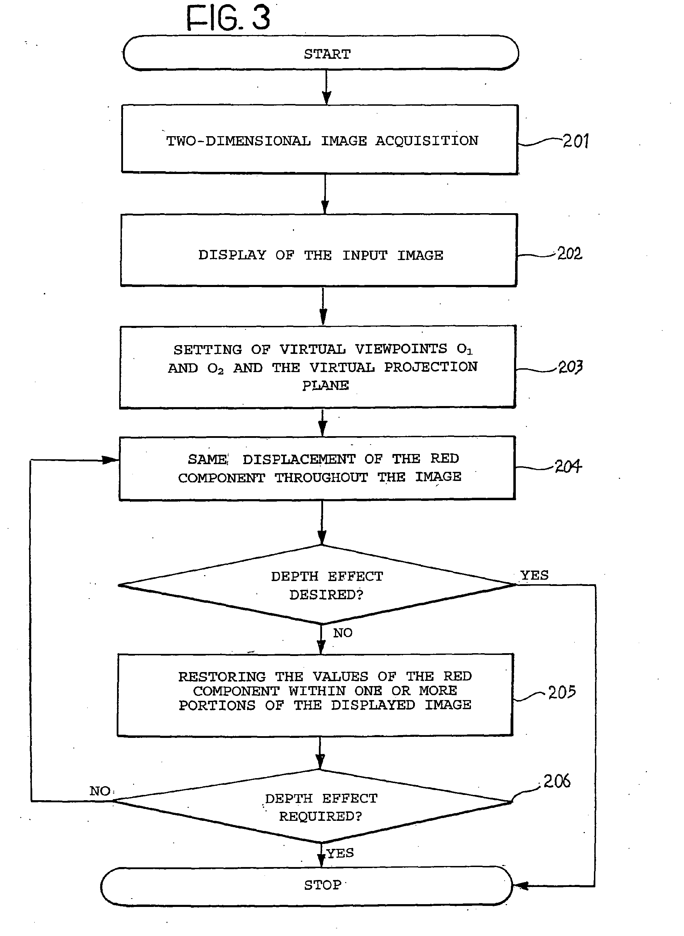

On the basis of the principle described above, a first embodiment of the process according to the invention (illustrated in Figure 3) makes it possible to obtain an image suitable for three-dimensional viewing, for example through the use of coloured spectacles with glasses of different colours, on the basis of a static two-dimensional image, for example a drawing or a photograph.

According to this first embodiment, implemented using the equipment in Figure 1, in a first stage 201, the two-dimensional image is acquired by the image input section 11, for example through the optical scanning of an image on a solid substrate or through a digital photographic camera. In a subsequent stage 202, this unmodified input image is displayed by display section 20.

The section 15 generating modified image information is programmed in such a way as to allow an operator to select one component of the RGB triplet and, starting from the displayed input image, to displace the values of that component along the rows of the input image, as a result of which each pixel belonging to a $n^{th}$ column is allocated the value of the selected component of the pixel in the same $m^{th}$ row belonging to the n - $N^{th}$ column, or the n + $N^{th}$ column:

$$c_{m,n}' = c_{m,n-N} \text{ or } c_{m,n}' = c_{m,n+N} ,$$

where $c_{m,n}'$ is the value adopted by the colour component in the pixel in the $m^{th}$ row and the $n^{th}$ column after a displacement of N positions in the component first associated with $c_{m,n-N}$ or $c_{m,n+N}$. It will be assumed below that this selected component coincides with the red component. Of course this component may be any other component of the RGB triplet, or another colour coding system, or a combination of several components. Experiments elsewhere have shown that the image obtained by displacing the red component has a better visual effect than images obtained by displacing the other components.

Modified image information generating section 15 is also programmed to allow the operator to select a portion of the image displayed by display section 20 by delimiting it from the rest of the matrix forming the image, for example using a pointer on the monitor controlled by a mouse or similar device.

In stage 203, a pair of virtual viewpoints $O_1$ and $O_2$ and a virtual projection plane 100 for the images observed from viewpoints $O_1$ and $O_2$ respectively, lying at a distance $z_p$ from these, is set by the operator.

According to the depth which it is desired to attribute to the output image and its location with respect to the projection plane, the objects shown in the input image will lie between the points of view and the projection plane or beyond the projection plane, or in both positions.

The process for forming the image according to the invention therefore comprises delimiting and selecting portions of the image from the input image containing the object or the part of the object in respect of which a particular depth is required, using modified image information generating section 15. Each of these portions of image containing part of the matrix of elemental areas is then associated with the same distance from the points of view.

Using modified image information generating section 15, the operator then applies a lateral displacement of the red, to a specific portion of the input image, which is substantially the same for all the pixels contained within that portion of image. Depending on whether it is desired to achieve that this portion should be placed behind or in front of projection plane 100, this displacement should be towards the left or towards the right respectively (on the basis of formula (1)). Furthermore, the greater the distance from projection plane 100, the greater should be the displacement of the red.

In this embodiment, definition of the image portions and the displacement of the red are substantially achieved through the alternation of the two stages 204 and 205 performed by the operator through modified image information generating section 15 provided with the functions described above. First stage 204 comprises a displacement of the red equal to a whole number of pixels which is the same for all the pixels in the input image. This stage 204 is then followed by a second stage 205 comprising a restoration of the initial conditions within one or more of the portions of input image selected by the operator, restoring the values of the red component from image information storage section 12.

Repetition of stages 204 and 205 is interrupted by the operator when an output image with the desired depth effect is obtained. This can be evaluated in an evaluation stage 206 by observing the image for example using spectacles with coloured glass.

As will be appreciated, repetition of such operations has the effect that by selecting different portions of the image at different stages of restoration a specific shift in the red is achieved for each portion of the image. Ultimately restored image portions would therefore have a greater distance from projection plane 100 than the image portions first restored, or never restored.

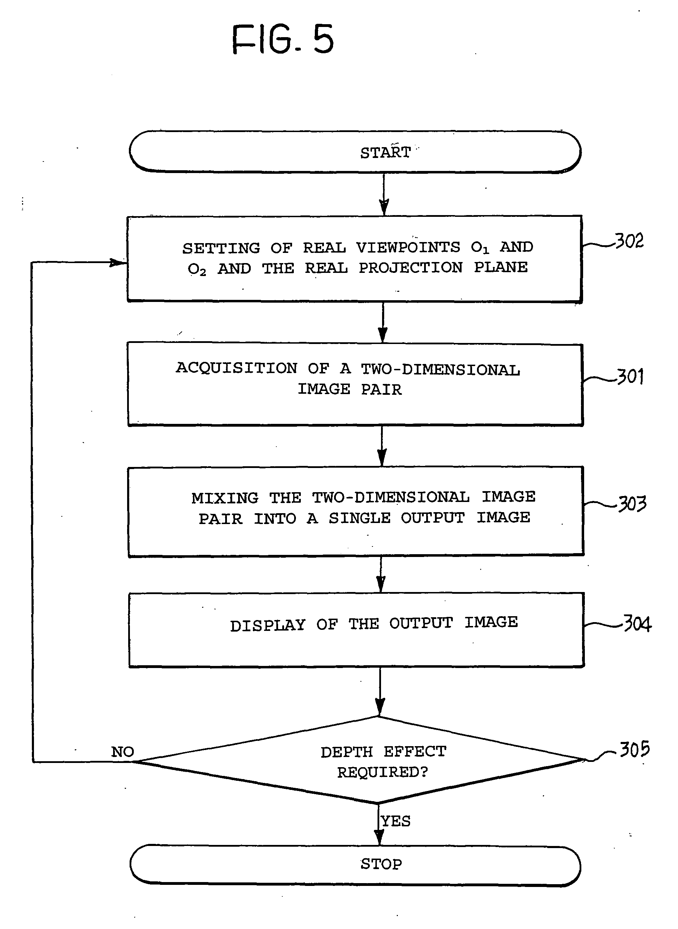

Figures 4 diagrammatically illustrate the effect of the repetition of stages 204 and 205 on any row in the pixel matrix for the input image. In Figure 4(a), values of the red component equal to $c_1$, ..., $c_{14}$ of the original input image are associated respectively with pixels having the abscissa 1, ..., 14 in that row. Figure 4(a) corresponds to what is displayed in stage 202. In Figure 4(b), a leftward displacement equal to one position throughout the image is applied to the red component. In Figure 4(c) on the left, restoration of the initial conditions is applied in the region formed by the pixels in position 5, ..., 10 in order to obtain a depth effect in that region in comparison with the rest of the image. In Figure 4(c) on the right, a further displacement to the left equal to one position is instead applied throughout the image. In Figure 4(d) on the left, a displacement to the left equal to one position is applied throughout the image to the row in Figure 4(c) on the left. In Figure 4(d) on the right, restoration of the initial conditions in the region formed by the pixels in position 5, ..., 10 is applied in order to obtain the depth effect in that region in comparison with the rest of the image.

As may be noted, in the sequence on the left of Figure 4, the region of pixels 5, ..., 10 has an effective displacement value within it which is substantially constant and less than that obtained with the sequence to the left, given that restoration was applied in a previous stage. Observing the image with coloured spectacles, the region of pixels 5, ..., 10 modified with the sequence to the left will show greater forward projection than the region modified with the sequence to the right. The value of the effective displacement only varies within the boundaries of the areas. In particular, the variation in the effective displacement within the boundary area between pixels 4 and 5 has the result that the values of the red component in the region of pixels 5, ..., 10 are copied to the left of that region overlapping the original ones, while, around the boundary area between pixels 10 and 11, the values of the red component to the right of the region of pixels 5, ..., 10 are cancelled as if they were "below" that region.

Using the process described above, the Applicant has obtained images from a monitor and/or printed on a paper medium which are suitable for three-dimensional viewing with coloured glass spectacles of the conventional type (left glass: red - right glass: cyan), but which are only slightly changed with respect to the original input two-dimensional images, such as to make clear two-dimensional viewing possible without the help of the spectacles.

The image obtained is also suitable for three-dimensional viewing using other conventional techniques. For example, it is possible to create a pair of stereoscopic images in which one image contains only the displaced red component and the other contains the other non-displaced components, which must be observed with a stereoscope, or it is possible to reproduce the image on a lenticular support provided in such a way that the displaced colour component is viewed by one eye separately from the other components viewed by the other eye.

In a second embodiment of the process according to the invention (illustrated in Figure 5), the image which is suitable for three-dimensional viewing is obtained from a pair of two-dimensional images. In an acquisition stage 301 the pair of two-dimensional images is acquired by image input section 11 through a pair of recording devices, for example the two objectives of a stereophotographic camera, or a pair of digital video cameras.

This pair of recording devices is provided with chromatic filters so that one device records only the red component while the other device only records all the other components (cyan).

Again this embodiment of the process according to the invention presupposes a stage 302 in which a pair of viewpoints $O_1$ and $O_2$ and a projection plane 100 for the images observed from viewpoints $O_1$ and $O_2$

respectively, located at a distance $z_p$ from the same, are provided, but in this case these are real and identified by the position and orientation of the recording devices. The use of a pair of mobile video cameras is advantageous because it makes it possible to change the distance between them and their orientation. The only difficulty lies in keeping these video cameras aligned vertically, so that the corresponding perspectives are oriented in the same plane, for example in the horizontal plane.

In this case, the definition of the image portions belonging to corresponding different depth planes to which a specific distance from viewpoints $O_1$ and $O_2$ is associated is effected automatically by modified image information generating section 15. In a blending stage 303, this is in fact programmed to receive the pair of two-dimensional images from image information storage section 11 and blend it in such a way that they are aligned vertically on the basis of the fact that the positions of the objects in the two images differ according to the law expressed by formula (1).

Displacement of the red is also automatically attributed during blending stage 303 on the basis of the fact that one camera records only the red component from a perspective which is different from that of the other camera.

The output image is automatically displayed (stage 304) by display section 20, making it possible to evaluate whether the desired depth effect has been achieved, in the course of an evaluation stage 305. This evaluation may be performed for example using coloured glass spectacles.

The fact that the output image is automatically displayed makes it possible to take advantage of a preview as described above, reducing recording times and costs, and also to have the possibility of handling special or spectacular effects. Furthermore, this fact makes the process according to the invention particularly suitable for direct three-dimensional television.

If image input section 11 comprises the pair of mobile video cameras, when it is desired to vary the depth effect, it is possible to vary the position and orientation of those video cameras directly, either manually or through the control of modified image information generating section 15.

In comparison with the manual technique previously described in Figure 3, this embodiment decomposes the image into a number of depth planes which is so great that they appear to be almost a continuum, while a very much lesser number of planes are dealt with in the manual technique, but nevertheless sufficient to create the sensation of the depth of objects and continuity in space in the human eye.

The output image is suitable for display by display section 20 via a non-three-dimensional monitor, as a result of which the three-dimensional view must be viewed with coloured spectacles of the conventional type (left: red - right: cyan). As an alternative, this image may be viewed without special spectacles through optical separation of the red and cyan components within display section 20 using an autostereoscopic screen of the conventional type, for example of the type provided with a matrix of cylindrical lenses. In this way, an image containing only the displaced red component and another image containing the other non-displaced components are written interlaced between pixel and pixel, and the optical separation is achieved through the microlenses.

According to a simplified variant of this embodiment (not illustrated), corresponding prism members arranged and orientated in such a way as to reflect and merge the corresponding input images into a single image suitable for viewing through coloured spectacles are associated with the recording devices of the pair. In this variant, merging of the images takes place directly as a result of the optics associated with the pair of recording devices, without the need for processing the images through CPU 25.

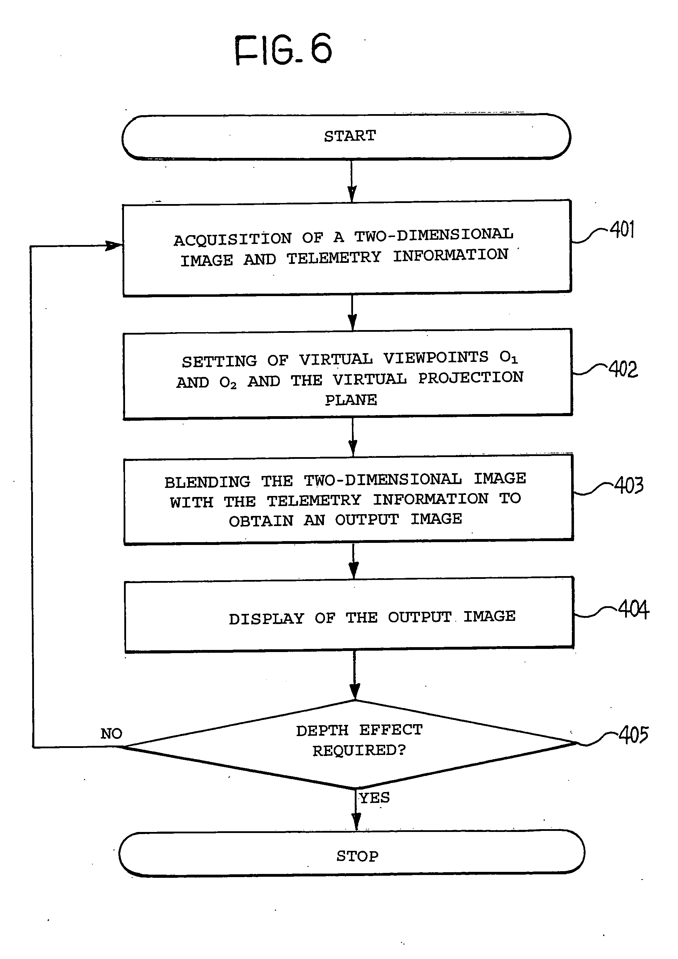

In a third embodiment of the process according to the invention (illustrated in Figure 6), the image suitable for three-dimensional viewing is obtained from a two-dimensional image and telemetry information on the distance from the object from which the image is acquired. In an acquisition stage 401 the two-dimensional image is acquired from image input section 11 through a static or dynamic image acquisition device of the type of those described with reference to the previous embodiments, while the telemetry information is acquired by image input section 11 through a telemetry device of the type of those conventionally used in space devices and satellites, electron microscopes, radar detectors, etc.

A telemetry information storage section (not illustrated) stores the digital telemetry information generated by the telemetry device.

In the case of dynamic images, synchronisation is applied between the input image signals and the telemetry information in a conventional way.

Modified image information generating section 15 is programmed to receive the two-dimensional image from image information storage section 11 and the telemetry information from the telemetry information storage section, and in order to modify the input image according to the law expressed by formula (1) on the basis of the telemetry information and the parameters inserted by the operator, as follows.

In a stage 402, a pair of virtual viewpoints $O_1$ and $O_2$ and a virtual projection plane 100 for the images observed from viewpoints $O_1$ and $O_2$ respectively located at a distance $z_p$ therefrom are set.

While the depth of the object from which the image is acquired with respect to the telemetry device is univocally determined by the distance between them and measured by that telemetry device, the operator can set the distance 2D between the virtual viewpoints $O_1$ and $O_2$ and the distance $z_p$ between them and virtual projection plane 100 using modified image information generating section 15.

In a stage 403 of blending the two-dimensional image with the telemetry information, the process of forming the image according to the invention provides for automatic delimitation of image portions of the input image which are associated with the same distance of the pixels contained therein with respect to the viewpoints on the basis of the telemetry information, through modified image information generating section 15. Modified image information generating section 15 therefore automatically applies a lateral displacement of the red to each image portion which is substantially the same for all the pixels contained within that image portion. Depending upon whether that portion lies behind or projects in front of projection plane 100, this displacement will be towards the left or towards the right (on the basis of formula (1)). Furthermore, the greater the distance from projection plane 100, the greater will be the displacement of the red.

In comparison with the manual technique previously described in Figure 3, this embodiment thus decomposes the image into a much greater number of depth planes and automatically attributes a displacement of the red to these on the basis of the telemetry information and the parameters 2D and $z_p$.

The output image is automatically displayed (stage 404) by display section 20, making it possible to evaluate whether the desired depth effect has been achieved, in the course of an evaluation stage 405. This evaluation may be performed for example using spectacles with coloured glasses.

In the situation where it is desired to vary the depth effect, it is possible to vary the parameters of the distance 2D between the virtual viewpoints $O_1$ and $O_2$ and the distance $z_p$ between these and virtual projection plane 100.

The output image so obtained can be viewed three-dimensionally with the image restitution devices described with reference to the previous embodiments.

**Claims**

1.  Process for the formation of an image suitable for three-dimensional viewing, **characterized in that** it comprises the stages of:

    -   providing (201; 301) a two-dimensional input image which is capable of being processed as a matrix of elemental areas, each of the said elemental areas being associated with a colour identified by a plurality of colour components;
    -   providing (202; 302) a pair of viewpoints ($O_1$, $O_2$) and at a predetermined distance ($z_p$) therefrom a plane (100) for projection of the images observed by the said viewpoints respectively;
    -   defining (204, 205; 303) within that input image image portions each comprising a part of the matrix of elemental areas, each of the said image portions being associated with the same distance from the viewpoints ($O_1$, $O_2$); and

- applying (204, 205; 303) a lateral displacement of the said colour component to the elemental areas of the matrix, this displacement having a value which is substantially the same within an individual portion of the input image, and correlated with its distance from the viewpoints ($O_1$, $O_2$) and the projection plane (100).

2. Process according to Claim 1, in which the said colour displacement is equal to a whole number of elemental areas.

3. Process according to Claim 1 or 2, in which definition of the image portions and application of the lateral displacement in the colour component take place in repeated stages of application of the displacement (204), in which the said displacement is applied identically for all the areas in the matrix, the said stages being alternated with restoration stages (205) in which the initial position of the displaced colour component is restored within one or more of the said portions of the input image.

4. Process according to Claim 1 or 2, in which a second input image is provided, the first input image and the second input image being associated with the said pair of viewpoints ($O_1$, $O_2$) respectively, and the distance between the said portions of the input image is determined on the basis of the difference in the position of each portion of the input image between the first input image and the second input image.

5. Process according to Claim 4, in which the said first and second input images are recorded by corresponding first and second recording means which are arranged in vertical alignment at a predetermined distance from each other and which can be oriented in such a way as to have perspective directions in the same plane.

6. Process according to Claim 4, in which the said first and second input images are recorded by a first and a second objective of a stereophotographic camera respectively.

7. Process according to Claim 5 or 6, in which the said first and second recording means, or the said first and second objectives of the stereophotographic camera, are provided with corresponding colour filters such that one of the said first and second recording means or objectives only records one colour component, while the other only records all the other components.

8. Process according to Claim 7, in which the said first and second recording means or the said first and second objectives of the stereophotographic camera are associated with corresponding prism members arranged in such a way as to directly merge the corresponding input images into a single image which is suitable for viewing with coloured spectacles.

9. Process according to Claim 1 or 2, in which telemetry information is provided in such a way that the distance of the said portions of the input image is automatically determined on the basis of the said telemetry information.

10. Image suitable for three-dimensional viewing, **characterized in that** it is obtained using a process according to one of the preceding claims.

11. Image according to Claim 10, **characterized in that** it is reproduced on a lenticular substrate arranged in such a way that the displaced colour component is viewed by one eye separatly from the other components viewed by the other eye.

12. Image according to Claim 11, **characterized in that** it is provided according to a pair of separate images, one of these containing the displaced colour component and the other the remainder, the said pair being suitable for viewing with a stereoscope.

# FIG. 1

```
                ┌──────────────────────────────────┐
    ┌──────────▶│     IMAGE INPUT SECTION          │──11
    │           └──────────────────────────────────┘
    │                          │
    │                          ▼
    │           ┌──────────────────────────────────┐
    │           │     TWO-DIMENSIONAL IMAGE         │──12
    │           │  INFORMATION STORAGE SECTION      │──┐
    │           └──────────────────────────────────┘  │
    │                          │                        │
  25│                          ▼                        │
    │           ┌──────────────────────────────────┐   │
  ┌─┴─┐         │    MODIFIED IMAGE INFORMATION     │──15
  │   │────────▶│       GENERATING SECTION          │   │
  │CPU│         └──────────────────────────────────┘   │
  │   │                       │                         │
  │   │                       ▼                         │
  │   │         ┌──────────────────────────────────┐   │
  │   │         │    MODIFIED IMAGE INFORMATION     │──16
  │   │         │        STORING SECTION            │   │
  │   │         └──────────────────────────────────┘   │
  │   │                       │                         │
  │   │                       ▼                         │
  │   │         ┌──────────────────────────────────┐──17
  └───┴────────▶│   IMAGE INFORMATION OUTPUT        │◀──┘
                │          SECTION                  │
                └──────────────────────────────────┘
                              │
                              ▼
                ┌──────────────────────────────────┐
                │        D/A CONVERTER              │──19
                └──────────────────────────────────┘
                              │
                              ▼
                ┌──────────────────────────────────┐
                │       DISPLAY SECTION             │──20
                └──────────────────────────────────┘
```

# FIG. 2

# FIG. 4

## FIG. 3

```
        ┌──────────────────────┐
        │        START         │
        └──────────────────────┘
                   │
                   ▼
   ┌─────────────────────────────────────┐
   │  TWO-DIMENSIONAL IMAGE ACQUISITION  │────201
   └─────────────────────────────────────┘
                   │
                   ▼
   ┌─────────────────────────────────────┐
   │      DISPLAY OF THE INPUT IMAGE     │────202
   └─────────────────────────────────────┘
                   │
                   ▼
   ┌─────────────────────────────────────┐
   │  SETTING OF VIRTUAL VIEWPOINTS O1   │
   │  AND O2 AND THE VIRTUAL PROJECTION  │────203
   │              PLANE                  │
   └─────────────────────────────────────┘
                   │
                   ▼
   ┌─────────────────────────────────────┐
   │   SAME DISPLACEMENT OF THE RED      │────204
   │   COMPONENT THROUGHOUT THE IMAGE    │
   └─────────────────────────────────────┘
                   │
                   ▼
           ╱─────────────────╲
          ╱   DEPTH EFFECT    ╲──── YES
          ╲    DESIRED?       ╱
           ╲─────────────────╱
                   │ NO
                   ▼
   ┌─────────────────────────────────────┐
   │   RESTORING THE VALUES OF THE RED   │
   │  COMPONENT WITHIN ONE OR MORE       │────205
   │  PORTIONS OF THE DISPLAYED IMAGE    │
   └─────────────────────────────────────┘
                   │
                   ▼
    NO     ╱─────────────────╲
   ────────╲   DEPTH EFFECT   ╲──── 206
           ╲    REQUIRED?     ╱
            ╲─────────────────╱
                   │ YES
                   ▼
        ┌──────────────────────┐
        │         STOP         │
        └──────────────────────┘
```

Setting of virtual viewpoints $O_1$ and $O_2$ and the virtual projection plane.

# FIG. 5

```
                    ┌──────────────────────────────┐
                    │            START             │
                    └──────────────────────────────┘
                                    │
                                    ▼
        ┌──────────────────────────────────────────────┐
        │   SETTING OF REAL VIEWPOINTS O₁ AND          │──302
        │   O₂ AND THE REAL PROJECTION PLANE           │
        └──────────────────────────────────────────────┘
                                    │
                                    ▼
        ┌──────────────────────────────────────────────┐
        │   ACQUISITION OF A TWO-DIMENSIONAL           │──301
        │   IMAGE PAIR                                  │
        └──────────────────────────────────────────────┘
                                    │
                                    ▼
        ┌──────────────────────────────────────────────┐
        │   MIXING THE TWO-DIMENSIONAL IMAGE           │──303
        │   PAIR INTO A SINGLE OUTPUT IMAGE            │
        └──────────────────────────────────────────────┘
                                    │
                                    ▼
        ┌──────────────────────────────────────────────┐
        │   DISPLAY OF THE OUTPUT IMAGE                │──304
        └──────────────────────────────────────────────┘
                                    │
                                    ▼
   NO ◄───────────────◄    DEPTH EFFECT REQUIRED?   ──305
                                    │ YES
                                    ▼
                    ┌──────────────────────────────┐
                    │            STOP              │
                    └──────────────────────────────┘
```

# FIG. 6

START

ACQUISITION OF A TWO-DIMENSIONAL IMAGE AND TELEMETRY INFORMATION ~401

SETTING OF VIRTUAL VIEWPOINTS $O_1$ AND $O_2$ AND THE VIRTUAL PROJECTION PLANE ~402

BLENDING THE TWO-DIMENSIONAL IMAGE WITH THE TELEMETRY INFORMATION TO OBTAIN AN OUTPUT IMAGE ~403

DISPLAY OF THE OUTPUT IMAGE ~404

NO — DEPTH EFFECT REQUIRED? ~405

YES

STOP